# EUROPEAN PATENT SPECIFICATION

(11) **EP 1 897 325 B1**
(45) Date of publication and mention of the grant of the patent: **22.04.2009**
(21) Application number: 06777270.7
(22) Date of filing: 06.06.2006
(51) Int. Cl.: H04L 29/06

(54) **SECURE DATA COMMUNICATIONS IN WEB SERVICES**
SICHERE DATENKOMMUNIKATION IN WEB-DIENSTEN
COMMUNICATIONS DE DONNEES SECURISEES DANS DES SERVICES WEB

(30) Priority: 28.06.2005 US 168716
(43) Date of publication of application: 12.03.2008
(73) Proprietor: International Business Machines Corporation, Armonk, New York 10504 (US)
(72) Inventor: NADALIN, Anthony Joseph, Austin, Texas 78734 (US); MCINTOSH, Michael, Clifton, New Jersey 07013 (US); AUSTEL, Paula, Cortlandt Manor, New York 10567 (US); HONDO, Maryann, Arlington, Massachusetts 02476 (US); NAGARATNAM, Nataraj, Morrisville, North Carolina 27560 (US)
(74) Representative: Sekar, Anita
(86) International application number: PCT/EP2006/062923
(87) International publication number: WO 2007/000386

(56) References cited:
- US-A1- 2004 208 164

## Description

### TECHNICAL FIELD OF THE INVENTION

The field of the invention is data processing, or, more specifically, methods, systems, and products for secure data communications in web services.

### BACKGROUND OF THE INVENTION

The term "web services" refers to a standardized way of integrating web-based applications. Web services typically provide business services upon request through data communications in standardized formats called bindings. A binding is a specification of a data encoding method and a data communications protocol. The most common binding in use for web services is data encoding in XML according to the SOAP protocol and data communications with HTTP. SOAP (Simple Object Access Protocol) is a request/response messaging protocol that supports passing structured and typed data using XML and extensions.

Unlike traditional client/server models, such as an HTTP server that provides HTML documents in response to requests from browser clients, web services are not concerned with display. Web services instead share business logic, data, and processes through a programmatic interface across a network. Web services applications interface with one another, not with users. Because all data communications among web services are carried out according to standardized bindings, Web services are not tied to any one operating system or programming language. A Java client running in a Windows_{™} platform can call web service operations written in Perl and running under Unix. A Windows application written in C++ can call operations in a web service implemented as a Java servlet.

Web services protocols typically are request/response protocols in which a client or intermediary requester transmits a request message to a web service requesting a particular service, and the web service provides a response in the form of a response message. In certain message exchange patterns, it is desirable for the initiator of an exchange to confirm that a message it receives was indeed a response to a request it initiated. Such a confirmation serves to establish agreement between the requester and a web service as to the content of the request that prompted the associated response. This confirmation helps reduce the risk from certain forms of attack. The current art does not, however, provide a way for a requester to confirm that a message it receives was indeed a response to a request it initiated. A representative of such current art is US patent application US 2004/0 208 164.

### DISCLOSURE OF THE INVENTION

Methods, systems, and products are disclosed in which secure data communications in web services are provided generally by receiving in a web service from a client a request containing an element bearing a first signature, the signature having a value; signing the value of the first signature, thereby creating a second signature; and sending a response from the web service to the client, the response including the second signature. The requester may verify that the response includes the second signature. The request may be encrypted, and the response may be encrypted. The first signature may be encrypted, and the web service may encrypt the value of the first signature and include the encrypted value of the first signature in the response. The web service may receive a request encoded in SOAP and may send a response also encoded in SOAP.

Signing the value of the first signature may be carried out by creating a signature confirmation element, the signature confirmation element having a value; setting the value of the signature confirmation element to the value of the first signature; signing the signature confirmation element, thereby creating a second signature; and including the signature confirmation element and the second signature in the response. When the web service receives a request which contains multiple elements bearing first signatures, each having values, then in some embodiments the web service may sign all of the values of the first signatures, thereby creating multiple second signatures; and the web service may send a response to the requester which includes the multiple second signatures.

The foregoing and other objects, features and advantages of the invention will be apparent from the following more particular description of exemplary embodiments of the invention, as illustrated in the accompanying drawings wherein like reference numbers represent like parts of the invention.

### BRIEF DESCRIPTION OF THE DRAWINGS

Figure 1 sets forth a network diagram illustrating an exemplary system for secure data communications in web services according to embodiments of the present invention.
Figures 2A and 2B set forth line drawings of exemplary architectures for web services in which secure data communications may be implemented according to embodiments of the present invention.
Figure 3 sets forth a block diagram of automated computing machinery comprising an exemplary computer useful in secure data communications in web services according to embodiments of the present invention.
Figure 4 sets forth a flow chart illustrating an exemplary method for secure data communications in web services according to embodiments of the present invention.
Figure 5 sets forth a flow chart illustrating a further exemplary method for secure data communications in web services according to embodiments of the present invention.
Figure 6 sets forth a flow chart illustrating a further exemplary method for secure data communications in web services according to embodiments of the present invention.
Figure 7 sets forth a flow chart illustrating a further exemplary method for secure data communications in web services according to embodiments of the present invention.

### DETAILED DESCRIPTION OF EXEMPLARY EMBODIMENTS

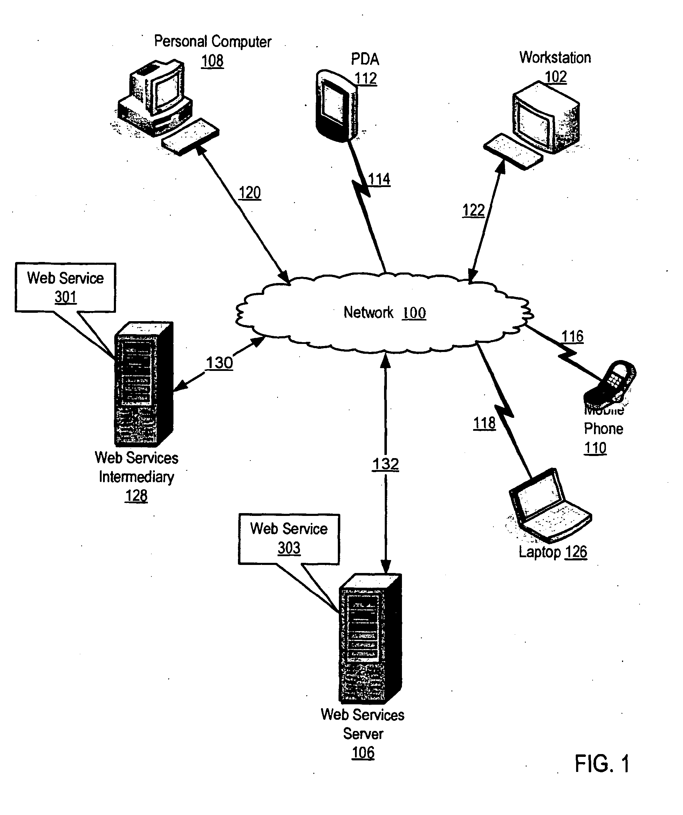

Exemplary methods, systems and products for secure data communications in web services according to embodiments of the present invention are described with reference to the accompanying drawings, beginning with Figure 1. Figure 1 sets forth a network diagram illustrating an exemplary system for secure data communications in web services according to embodiments of the present invention. The term 'network' is used in this specification to mean any networked coupling for data communications among two or more computers. Network data communication typically is implemented with specialized computers called routers. Networks typically implement data communications by encapsulating computer data in messages that are then routed from one computer to another. A well known example of a network is an 'internet,' an interconnected system of computers that communicate with one another according to the 'Internet Protocol' as described in the IETF's RFC 791. Other examples of networks useful with various embodiments of the present invention include intranets, extranets, local area networks. ('LANs'), wide area networks ("WANs"), and other network arrangements as will occur to those of skill in the art. The use of any networked coupling from a requester to a web server supporting a web service is well within the scope of the present invention.

The system of Figure 1 includes a data communications network (100). Network (100) provides data communications between requesters (108, 112, 102, 110, 126) and web services (106, 128). Web services server (106) is a computer, coupled for data communications through wireline connection (132) to network (100), upon which a web service (303) is installed and operative. Computer program instructions for carrying out the functions of the web service (303) are stored in a computer memory in web services server (106). Client devices ('requesters') transmit to server (106) requests for services. The web service (303) receives the requests over the network (100), processes the requests, and transmits responses over network (100). The system of Figure 1 includes several requesters capable of transmitting a request for web services to web service (303) and receiving a response. Requesters in the system of Figure 1 include:
- workstation (102), a computer coupled to network (100) through wireline connection (122),
- personal computer (108), coupled to network (100) through wireline connection (120),
- personal digital assistant (112), coupled to network (100) through wireless connection (114),
- laptop computer (126), coupled to network (100) through wireless connection (118); and
- mobile phone (110), coupled to network (100) through wireless connection (116).

The term 'requester' refers to any data communications client device, that is, any device capable of coupling for data communications to a web service, transmitting a request to the web service, and receiving a response back from the web service. Examples of requesters are personal computers, internet-enabled special purpose devices, internet-capable personal data administrators, and others that will occur to those of skill in the art. Various embodiments of requesters are capable of wired and/or wireless couplings to web services. The use as a requester of any client device or instrument capable of accessing a web service through a network is well within the scope of the present invention.

Figure 1 also includes web services intermediary (128), coupled to network (100) through wireline connection (130). Web services intermediary (128) has installed and operative upon it a web service (301). Web service (301) provides intermediary web services. A web services intermediary is a web services component, in this example, a server, that lies between a web services requester and a web service. Intermediaries operate generally by intercepting a request from a client, providing intermediary services, and then forwarding the client request to a web services provider (sometimes referred to as a 'target service'). Similarly, responses from the web services provider (the target service) are intercepted, operated upon, and then returned to the original requester.

Services provided by intermediaries include, for example, authentication of sources of requests for target services, message validation for content and form, and message logging for auditing purposes. Intermediaries may provide management reporting services, number of web service hits, quantity and timing of services used by individual clients, and so on. Intermediaries can be used as caches in support of improved performance by storing frequently changing but frequently requested data such as news stories, for example. Intermediaries can be used for performance improvement in the sense of load balancing, storing requests for services from several clients and forwarding them to a target service during off-peak service hours. Intermediaries may aggregate services, as, for example, an accounting intermediary that accepts requests for account postings that are then forwarded to separate target services for accounts payable, accounts receivable, and general ledger services.

The system of Figure 1 operates generally to provide secure data communications in web services according to embodiments of the present invention by receiving in a web service, such as web service (303) for example, from a requester a request containing an element bearing a first signature having a value. The web service signs the value of the first signature, thereby creating a second signature, and sends a response from the web service (303) to the requester that includes the second signature. As explained in more detail below, sending a response bearing the second signature (a signature of the first signature) authenticates the identity of the web service to the requester and verifies message integrity, that the response is a response to the exact request received from the requester.

The arrangement of client devices, servers, networks, and other devices making up the exemplary system illustrated in Figure 1 are for explanation, not for limitation. Data processing systems useful for secure data communications in web services according to various embodiments of the present invention may include additional servers, routers, other devices, and peer-to-peer architectures, not shown in Figure 1, as will occur to those of skill in the art. Networks in such data processing systems may support many data communications protocols, including for example TCP/IP, HTTP, WAP, HDTP, and others as will occur to those of skill in the art. Various embodiments of the present invention may be implemented on a variety of hardware platforms and network configurations in addition to those illustrated in Figure 1.

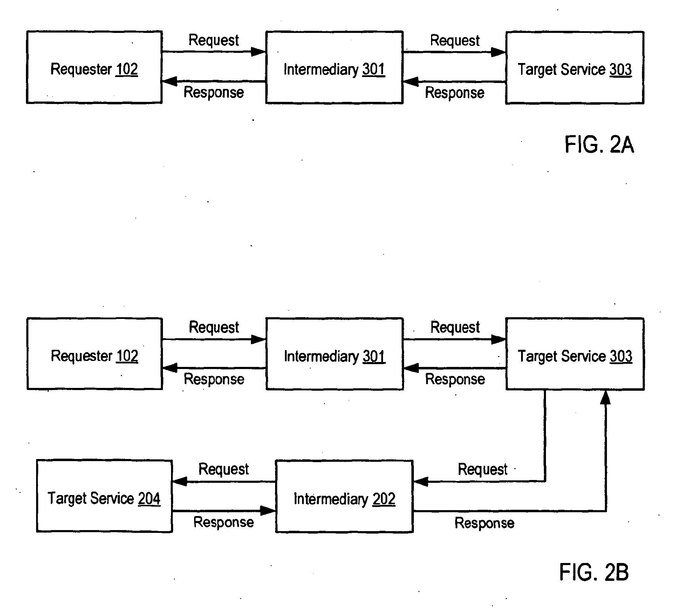

For further explanation, Figure 2A sets forth a line drawing of an exemplary computer architecture for web services in which secure data communications in web services may be implemented according to embodiments of the present invention. In the architecture of Figure 2A, web service intermediary (301) is coupled for data communications through a data communications protocol to requester (102) and target web service (303). Both web service intermediary (301) and target web service (303) are installed upon servers supporting web services. A web services component in the position of requester (102) is referred to generally in this specification as a `requester.' Similarly, a component in the position of intermediary (301), particular when viewed from the point of view of a requester, may be referred to as a 'web service.'

The client/server distinction, as well as the 'requester' designation, must be used carefully in the context of web services. Whether a particular component is a requester, a client, a server, or a service depends on the component's role in an exchange of request/response messages in a communications protocol. For further explanation, Figure 2A sets forth a line drawing of an exemplary computer architecture for web services in which secure data communications in web services may be implemented according to embodiments of the present invention. In the architecture of Figure 2B, for example, target service (303), in the process of preparing a response to a request from requester (102), may in turn request web services from target web service (204) through web service intermediary (202). In doing so, target web service (303) is acting as a client and as a requester. Intermediary (202) in forwarding requests to target service (204) is acting as a client and as a requester, and intermediary (202) in receiving requests from target service (303) and preparing and sending responses to target service (303) is acting as a web service. Similarly, intermediary (301) in forwarding requests to target service (303) is acting as a client and as a requester, and intermediary (301) in receiving requests from requester (102) and preparing and sending responses to requester (102) is acting as a web service. Thus it is seen that whether a particular web services component is considered a client or a server, a requester or a service, at any particular time depends upon the particular function being performed by the component at the time. A web services component can be a client or requester one moment and a server or a web service the next. To reduce the risk of confusion from terminology, therefore, web services components are usually described in this specification by using the terms `requester,' 'intermediary,' and 'web service' rather than 'client' or 'server.'

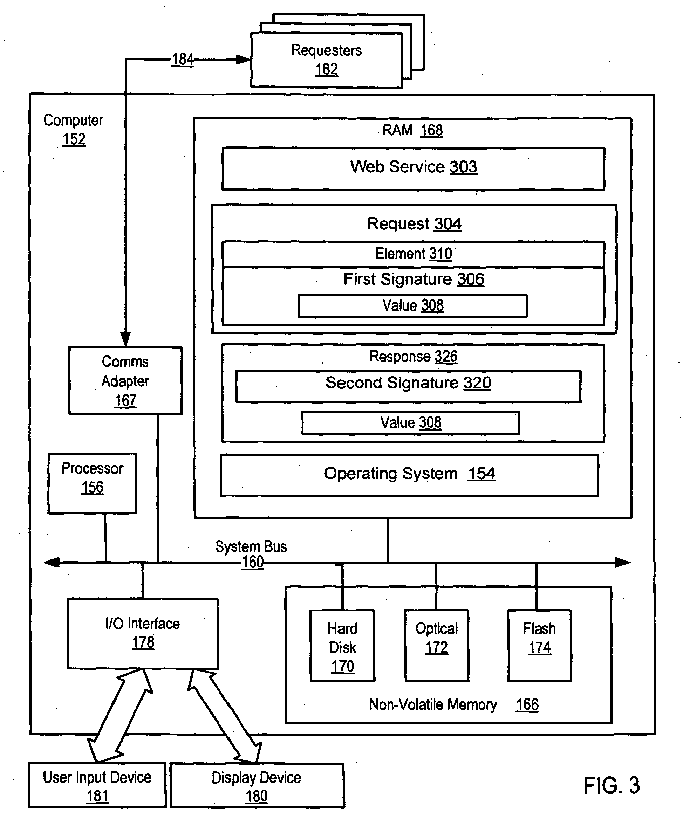

Secure data communications in web services in accordance with the present invention are generally implemented with computers, that is, with automated computing machinery. In the system of Figure 1, for example, all the nodes, servers, and communications devices are implemented to some extent at least as computers. For further explanation, therefore, Figure 3 sets forth a block diagram of automated computing machinery comprising an exemplary computer (152) useful in secure data communications in web services according to embodiments of the present invention. The computer (152) of Figure 3 includes at least one computer processor (156) or 'CPU' as well as random access memory (168) ("RAM") which is connected through a system bus (160) to processor (156) and to other components of the computer.

Stored in RAM (168) is a web service (303), a set of computer program instructions improved for secure data communications in web services according to embodiments of the present invention. Also stored in a RAM (168) is a request (304) for a service. The request contains an element (310) bearing a first signature (306) having a value (308). Also stored in a RAM (168) is a response (326) to the request. The response bears a second signature (320) (a signature of the first signature). The response also bears the value (308) of the first signature. The computer program instructions of the web service (303) include instructions for receiving in the web service (303) from a requester (182) a request (304) containing an element bearing a first signature (306) having a value, signing the value of the first signature, thereby creating a second signature (320), and sending a response from the web service (303) to the requester. (182) that includes the second signature (320). Sending a response bearing the second signature (a signature of the first signature) has the useful effect of authenticating the identity of the web service to the requester and verifying message integrity, that is, verifying that the response is a response to the exact request received from the requester.

Also stored in RAM (168) is an operating system (154). Operating systems useful in computers according to embodiments of the present invention include UNFIX, Linux, Microsoft NT, AIX, IBM's i5/OS, and others as will occur to those of skill in the art (UNIX is a registered trademark of The Open Group in the United States and other countries; Linux is a registered trademark of Linus Torvalds in the United States, other countries, or both; Microsoft, Windows, Windows NT, and the Windows logo are trademarks of Microsoft Corporation in the United States, other countries, or both; AIX, IBM and i5/OS are registered trademarks of International Business Machines Corporation). Operating system (154), web service (303), request (304), and response (310) in the example of Figure 3 are shown in RAM (168), but many components of such software typically are stored in non-volatile memory (166) also.

Computer (152) of Figure 3 includes non-volatile computer memory (166) coupled through a system bus (160) to processor (156) and to other components of the computer (152). Non-volatile computer memory (166) may be implemented as a hard disk drive (170), optical disk drive (172), electrically erasable programmable read-only memory space (so-called `EEPROM' or 'Flash' memory) (174), RAM drives (not shown), or as any other kind of computer memory as will occur to those of skill in the art.

The example computer of Figure 3 includes one or more input/output interface adapters (178). Input/output interface adapters in computers implement user-oriented input/output through, for example, software drivers and computer hardware for controlling output to display devices (180) such as computer display screens, as well as user input from user input devices (181) such as keyboards and mice.

The exemplary computer (152) of Figure 3 includes a communications adapter (167) for implementing data communications connections (184) with clients, requesters (182), web service intermediaries, other web services, and other computers. Such data communications may be carried out through serially through RS-232 connections, through external buses such as USB, through data communications networks such as IP networks, and in other ways as will occur to those of skill in the art. Communications adapters implement the hardware level of data communications through which one computer sends data communications to another computer, directly or through a network. Examples of communications adapters useful for determining availability of a destination according to embodiments of the present invention include modems for wired dial-up communications, Ethernet (IEEE 802.3) adapters for wired network communications, and 802.11b adapters for wireless network communications.

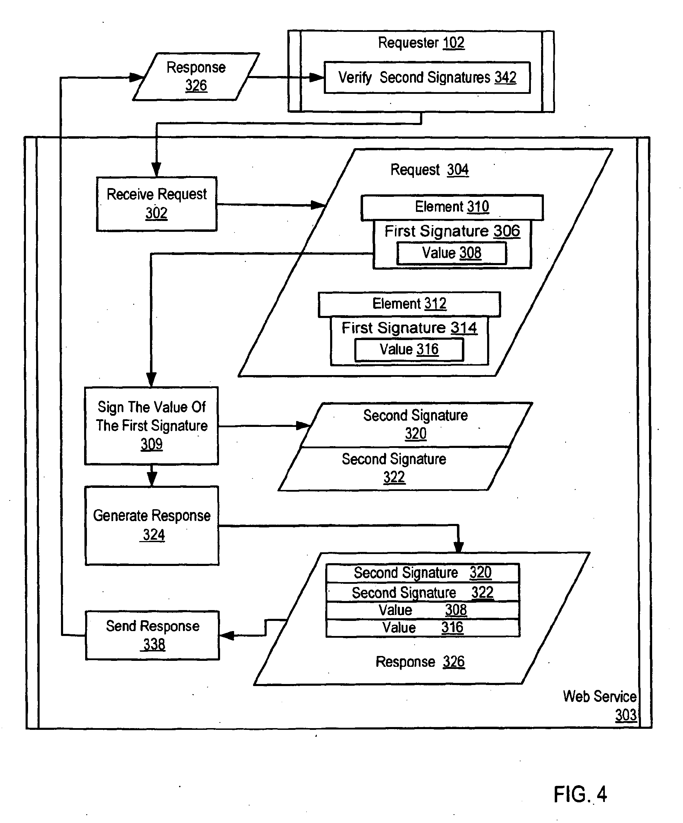

For further explanation, Figure 4 sets forth a flow chart illustrating an exemplary method for secure data communications in web services according to embodiments of the present invention that includes receiving (302) in a web service (303) a request (304) from a requester (102). In the example of Figure 4, request (304) contains an element (310) bearing a first signature (306). The first signature (306) has a value (308). Request (304) may be a message in a web services request/response protocol such as for example, SOAP. Element (310) is an instance of message structure. SOAP messages are expressed in XML, so in the example of SOAP, element (310) may be implemented as an XML element, that is, message structure implemented with XML tags.

First signature (306) may be implemented as a digital signature for element (310), for example, by hashing element (310) and encrypting the hash with requester's private key from a public key infrastructure. This process of creating a digital signature from an element is called 'signing.' First signature (306) may be incorporated into request (304) by including the encrypted hash in the request. In the example of a SOAP message, the signature may be incorporated into the request (304) by creating a SOAP signature element, whose value is that of the encrypted hash, and including the SOAP signature element in the request (304).

The method of Figure 4 also includes signing (309) the value (308) of the first signature (306), thereby creating a second signature (320). The web service generates (324) a response (326) to the request (304). As with the request (304), the response is a message in a web services request/response protocol. The response (326) includes the second signature (320). Like first signature (306), second signature (320) may be implemented by hashing the value (308) of the first signature and encrypting the hash with web service's private key from a public key infrastructure. Second signature (320) may be incorporated into a response (326) by including the encrypted hash in the response (326). In the example of a SOAP message, the signature may be incorporated into response (326) by creating a SOAP signature element, whose value is that of the encrypted hash, and including the SOAP signature element in response (326). The response (326) may also contain the value (308) of the first signature (306). The method of Figure 4 also includes sending (338) the response (326) which includes the second signature from web service (303) to requester (102).

In the method of Figure 4, requester (102) verifies (342) that the response (326) includes a second signature (320) and that the second signature is a signature of the value (308) of the first signature (306). In the case of a SOAP request, for example, a signature may be implemented as a SOAP signature element. Requester (102) may verify that the request contains a signature by examining the message for a SOAP signature element.

Requester (102) may verify that the second signature is a signature of the first signature by, for example, decrypting the second signature, yielding a purported hash of the first signature. Requester may compare the hash so produced with a hash of the first signature computed at the time from a stored copy of the first signature. Alternatively, requester (102) may store the hash of the first signature at the time when requester created the first signature and use the stored copy of the hash of the first signature to compare with the purported hash from the response message. The fact that the second signature is a signature of the value (308) of the first signature (306) is verified (342) if the two hashes are equal. That the two hashes are equal also verifies the decryption of the second signature. Requester's decrypting the second signature with the web service's public key authenticates the identity of the web service because the second signature can only have been encrypted by the web service using the web service's private key. The verification process assures requester (102) of the integrity of the value (308) of the first signature (306) as embedded in second signature (320), that is, that the first signature has been received back from the web service without alteration.

In the example of Figure 4, request (304) contains two elements (310, 312), with each element bearing a first signature (306, 314). The illustration of two elements in request (304) is not a limitation of the present invention. The number two is used merely to illustrate that a request (304) may contain multiple elements (310, 312) bearing first signatures (306, 314), with each first signature having a value (308, 316). The method of Figure 4 further includes signing (309) all the values (308, 316) of the first signatures, thereby creating multiple second signatures (320, 322). The method of Figure 4 further includes sending (338) a response (326) from the web service (303) to the requester (102), the response (326) including the multiple second signatures (320, 322). The values (308, 316) of the first signatures (306, 314) may also be included in the response (326).

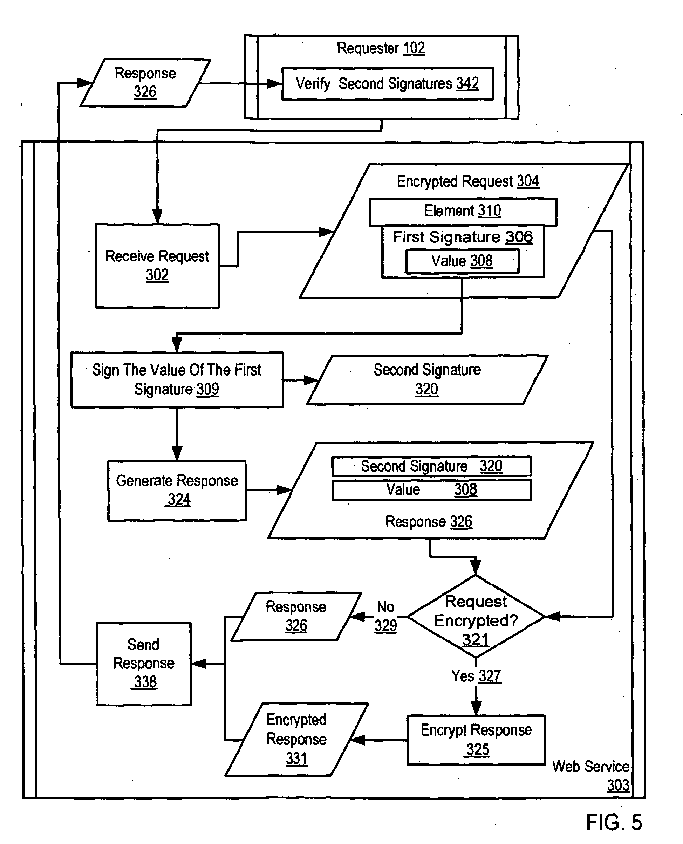

For further explanation, Figure 5 sets forth a flow chart illustrating a further exemplary method for secure data communications in web services according to embodiments of the present invention, in which a received request (304) may be encrypted. The process of encrypting data involves applying an algorithm to the data to convert it to an unintelligible form. Typical encryption algorithms may involve use of a secret, known as a key. Some algorithms use one secret key which is shared between a requester and a web service. Other algorithms use two keys, a private key and a public key. Commonly used encryption algorithms include 3DES (Data Encryption Standard), CAST-128, Twofish, and Advanced Encryption Standard (AES).

The exemplary method of Figure 5 is similar to the method of Figure 4. That is, the method of Figure 5 includes receiving (302) an encrypted request (304) bearing a first signature (306) having a value (308), signing the value (308) of the first signature (306), and sending (338) a response (326) from web service (303), all operative in a manner similar to the method of Figure 4. The method of Figure 5, however, also includes determining (321) whether the received request (304) is encrypted. In the case of a SOAP request, for example, a message security header may contain information describing whether a request or elements of a request are encrypted, and determining (321) whether the received request is encrypted may be carried out by examining such a request message security header. In the example of Figure 5, if the request is encrypted (327), the method includes encrypting (325) the response (331) in the web service (303). If the request is not encrypted (329), the web service sends (338) the response (326) without encrypting it.

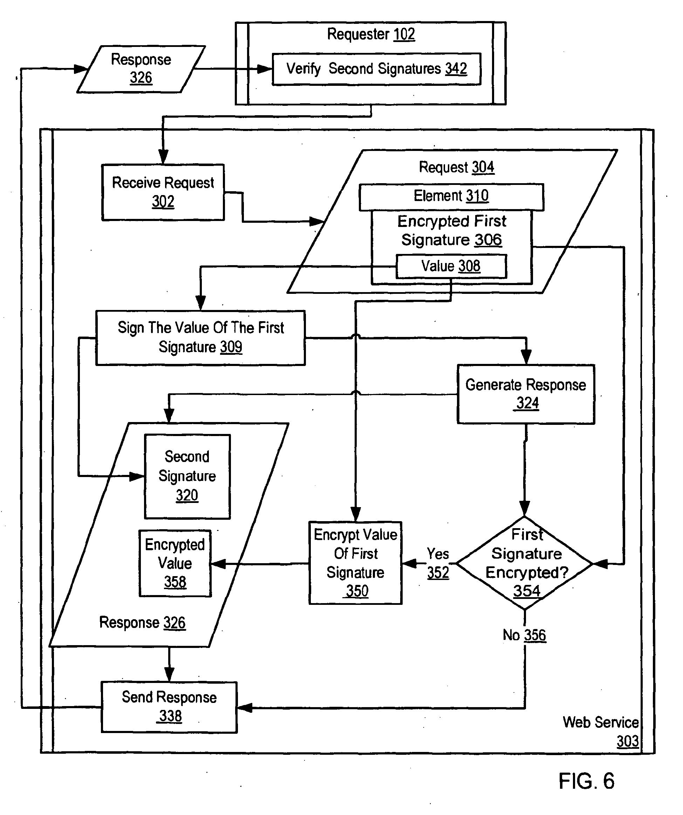

For further explanation, Figure 6 sets forth a flow chart illustrating an exemplary method for secure data communications in web services according to embodiments of the present invention in which a first signature may be encrypted. The method of Figure 6 is similar to the method of Figure 4. That is, the method of Figure 6 includes receiving (302) an request (304) bearing an encrypted first signature (306) having a value (308), signing the value (308) of the first signature (306), and sending (338) a response (326) from web service (303), all operative in a manner similar to the method of Figure 4. The method of Figure 6, however, also includes determining (354) whether the first signature is encrypted. In the case of a SOAP request, for example, a security header may contain information describing whether a request or elements of a request are encrypted, and determining (354) whether the first signature (306) of the received request is encrypted may be carried out by examining such a request message security header.

When the first signature (306) is encrypted, encrypting the value (308) of the first signature in the response can help protect the key used to produce the first signature. If the first signature is sent encrypted in the request (304), and the value (308) of the first signature (306) is not encrypted in the response (326), then there is some risk of an attacker comparing the encrypted and unencrypted signature values and gaining information about the key used by requester (102) to produce the signature in request (304). In the example of Figure 6, therefore, if the first signature is encrypted (352), the method includes encrypting (350) the value (308) of the first signature in the web service (303) and including the encrypted value (358) in the response (326). If the value of the first signature is not encrypted (356), the web service sends (338) the response (326) without encrypting the value of the first signature.

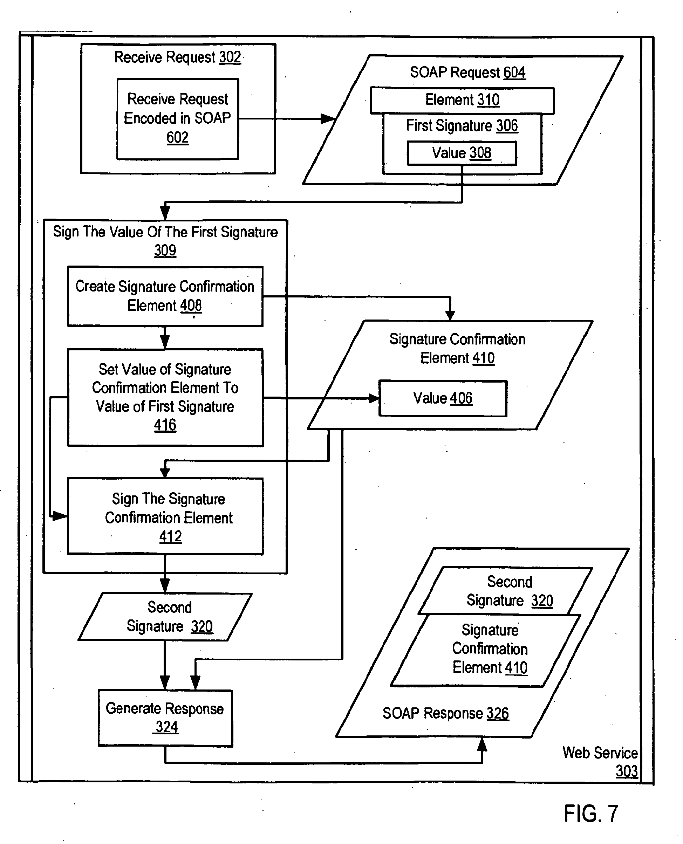

For further explanation, Figure 7 sets forth a flow chart illustrating a further exemplary method for secure data communications in web services according to embodiments of the present invention that uses the SOAP/HTTP binding for web services. The method of Figure 7 is similar to the method of Figure 4. That is, the method of Figure 7 includes receiving (302) a request (604) encoded in SOAP bearing a first signature (306) having a value (308), signing (309) the value (308) of the first signature (306), and sending a response from web service (303), all operative in a manner similar to the method of Figure 4. The method of Figure 7 further includes receiving (602) a request encoded in SOAP (604) and creating (408) a signature confirmation element (410), the signature confirmation element having a value (406). A signature confirmation element is a SOAP data structure containing a value field. Web service (303) sets (416) the value (406) of the signature confirmation element (410) to the value (308) of the first signature (306). The method of Figure 7 further includes the web service (303) signing (412) the signature confirmation element (410), thereby creating a second signature (320). In this application, "signing" a first element will also include signing a signature confirmation element whose value is the first element. The method of Figure 7 further includes generating a response (326) to the SOAP request (604), which includes the signature confirmation element (410) and the second signature (320).

In the example of Figure 7, SOAP request (604) contained one signature with a value (308), and the response (326) contained one signature confirmation element (410). The illustration of single signature confirmation element is not a limitation of the present invention. The SOAP request (604) may contain multiple signed elements, with multiple signatures. In some methods for secure data communications in web services according to various embodiments of the present invention, the SOAP response (326) may include a signature confirmation element (410) for each signature in the original request. Each signature confirmation element (410) contains the value (406) of the corresponding signature. In some methods for secure data communications in web services according to various embodiments of the present invention, the SOAP response (326) may include a single signature confirmation element (410), whose value (406) is the value of one of the signatures in the original request.

Following is an example of a pseudocode SOAP request:

```
 <S11:Envelope xmlns:Sl1="..." xmlns:wsse="..." xmlns:wsu="..." xmlns:xenc="..."
   xmlns:ds="...">
    <S11:Header>
        ...
        <wsse:Security>
           ...
              <ds:Signature>
                      ...
                      <ds:SignedInfo>
                      <ds:Reference URI="# CreditCardInfo">
                          ...
                      </ds:Reference>
                 </ds:SignedInfo>
                 <ds:SignatureValue>
                         kpRyejY4uxwT9I74FYv8nQ=
                 </ds:SignatureValue>
                 <ds:KeyInfo>
                      ...
                 </ds:KeyInfo>
             </ds:Signature>
        </wsse:Security>
               ...
    </S11:Header>
    <S11:Body>
        <CreditCardInfo wsu:Id="CreditCardInfo">
        </CreditCardInfo>
                      ...
    </S11:Body>
 </S11 :Envelope>
```

This example is described as 'pseudocode' because it is an explanation presented in the general form of XML code rather than an actual working model of a request. This example encapsulates a SOAP <header> element and a SOAP <body> element in a SOAP <envelope>. The header includes security data in a <security> element. The body includes the request data. This exemplary SOAP request contains an element named <wsse:Security> bearing a signature named <ds:Signature>. The signature has a value named <ds:SignatureValue>. Thus the SOAP request illustrated in this example implements a request of the kind described above and illustrated at reference (604) of Figure 7.

The value of the signature is "kpRyejY4uxwT9I74FYv8nQ." The value is obtained by hashing and then encrypting the element that was signed. The <reference> element of the signature element indicates that the name of the element signed by the signature is "CreditCardInfo." The <creditCardInfo> element is contained in the body of the request. The "Id" attribute of CreditCardInfo is CreditCardInfo, indicating that the element may be referenced by "CreditCardInfo". Thus, the signature signs the CreditCardInfo element.

The following is an example of a pseudocode SOAP response message that may implement a response to the web services request represented by the above request message:

```
 <S11 :Envelope xmlns: S 11 ="..." xmlns:wsse="..." xm!ns:wsu="..." xmtns:xenc="..."
   xmlns:ds="..." xmlns:wsse11="...">
       <S11:Header>
       ...
              <wsse:Security>
             <wssell:SignatureConfirmation wsu:Id="SignatureConfirmation"
                      Value="kpRyejY4uxwT9174FYv8n=">
                      ...
              <ds:Signature>
                          ...
                      <ds:SignedInfo>
                                       ...
                              <ds:Reference URI="#SignatureConfinnation">
                                             <ds:DigestMethod
                                    Algorithm="http://www.w3.org/2000/xmldsig#shal" />
                               <ds:DigestValue>
                                    LyLsF0Pi4wPU....
                               </ds:Digest Value>
                                     </ds:Reference>
                  </ds:SignedInfo>
                  <ds:SignatureValue>
                      MC0CFFrVLtR1k
                  </ds: SignatureValue>
                  <ds:KeyInfo> ... </ds:KeyInfo>
             </ds: Signatwe>
                      ...
              </wsse:Security>
                  ...
       </S11:Header>
       <S11:Body>
             ...
       </S11:Body>
 </S11 :Envelope>
```

In this example, a SOAP response contains a signature confirmation element having a value equal to the value of the signature in the request. The SOAP response also contains a signature, which signs the signature confirmation element. Thus the SOAP response described in this example implements a response of the kind described above and illustrated at reference (326) of Figure 7.

Similar to the exemplary SOAP request set forth above, this exemplary SOAP response contains a header and body within a SOAP envelope. The header contains security information set forth in an element named <wsse: Security>. Within the security element is a <signatureConfirmation> element which conveys, in an attribute named "Value," the value of the first signature from the corresponding request. The "Value" attribute in this example is set to "kpRyejY4uxwT9174FYv8nQ," equal to the value of the signature in the request. The <signatureConfirmation> element also has an identification attribute named "Id" whose value is "SignatureConfirmation."

The security element <wsse:Security> also contains a signature element named <ds: Signature>. The value of a second signature, a signature of the first signature from the request, is set forth in an element of the <ds:Signature> element named <ds:SignatureValue>. The value of the second signature in this example is set to "MC0CFFrVLtR1k." The <ds:Reference> element of the signature element, by its "URI" attribute set to "#SignatureConfirmation" identifies the data that is signed to create the second signature. In this example, <ds:Reference> identifies the first signature as the signed data, that is, the value in the <wsse11 :SignatureConfirmation> element, "kpRyejY4uxwT9174FYv8nQ." This example SOAP response therefore contains a first signature, a second signature, and a URI identifying the first signature as the data that is signed to create the second signature.

In secure data communications in web services according to various embodiments of the present invention, a requester may verify that a SOAP response corresponds to a particular SOAP request by finding the signature confirmation element in the response and comparing the value of the signature confirmation element with the value of the signature in the corresponding SOAP request. When the SOAP request contains multiple signatures, the requester may find all of the signature confirmation elements contained in the response, and check the values of the value fields of the signature confirmation elements against the values of the signatures in the original SOAP request.

The exact formats of the example SOAP request and example SOAP response set forth above are not a limitation of the present invention. The above examples are merely explanations of a possible format for a SOAP request and SOAP response for secure data communications in web services according to the present invention. When using SOAP message structures or the SOAP data communications protocol for secure data communications in web services according to various embodiments of the present invention, signatures may be implemented in any data structure that will occur to those of skill in the art, and all such structures are well within the scope of the present invention.

Exemplary embodiments of the present invention are described largely in the context of a fully functional computer system for secure data communications in web services. Readers of skill in the art will recognize, however, that the present invention also may be embodied in a computer program product disposed on signal bearing media for use with any suitable data processing system. Such signal bearing media may be transmission media or recordable media for machine-readable information, including magnetic media, optical media, or other suitable media. Examples of recordable media include magnetic disks in hard drives or diskettes, compact disks for optical drives, magnetic tape, and others as will occur to those of skill in the art. Examples of transmission media include telephone networks for voice communications and digital data communications networks such as, for example, Ethernets and networks that communicate with the Internet Protocol and the World Wide Web. Persons skilled in the art will immediately recognize that any computer system having suitable programming means will be capable of executing the steps of the method of the invention as embodied in a program product. Persons skilled in the art will recognize immediately that, although some of the exemplary embodiments described in this specification are oriented to software installed and executing on computer hardware, nevertheless, alternative embodiments implemented as firmware or as hardware are well within the scope of the present invention.

It will be understood from the foregoing description that modifications and changes may be made in various embodiments of the present invention without departing from its scope. The descriptions in this specification are for purposes of illustration only and are not to be construed in a limiting sense. The scope of the present invention is limited only by the language of the following claims.

## Claims

1. A method for secure data communications in web services, the method comprising:
receiving in a web service from a requester a request containing an element bearing a first signature, the signature having a value;
signing the value of the first signature, thereby creating a second signature; and
sending a response from the web service to the requester, the response including the second signature.

2. The method of claim 1, wherein:
receiving a request further comprises receiving an encrypted request; and
the method further comprises encrypting the response in the web service.

3. The method of any preceding claim, wherein:
receiving a request further comprises receiving a request with the first signature encrypted;
the method further comprises encrypting the value of the first signature; and
the response further comprises the encrypted value of the first signature.

4. The method of any preceding claim, wherein:
receiving a request further comprises receiving a request encoded in SOAP; and
sending a response further comprises sending a response encoded in SOAP.

5. The method of claim 4, wherein signing the value of the first signature further comprises:
creating a signature confirmation element, the signature confirmation element having a value;
setting the value of the signature confirmation element to the value of the first signature; and
signing the signature confirmation element, thereby creating a second signature;
wherein the response includes the signature confirmation element and the second signature.

6. The method of any preceding claim, wherein:
the request further comprises a plurality of elements bearing first signatures, the first signatures having values;
signing the value of the first signature further comprises signing the values of all of the first signatures, thereby creating a plurality of second signatures; and
sending a response further comprises sending a response that includes the plurality of second signatures.

7. A system for secure data communications in web services, the system comprising a computer processor and computer memory, the computer memory operatively coupled to the computer processor, the computer memory having disposed within it computer program instructions capable of:
receiving in a web service from a requester a request containing an element bearing a first signature, the signature having a value;
signing the value of the first signature, thereby creating a second signature; and
sending a response from the web service to the requester, the response including the second signature.

8. The system of claim 7, wherein:
receiving a request further comprises receiving an encrypted request; and
the system further comprises computer program instructions capable of encrypting the response in the web service.

9. The system of any of claims 7 to 8, wherein:
receiving a request further comprises receiving a request with the first signature encrypted;
the system further comprises computer program instructions capable of encrypting the value of the first signature; and
the response further comprises the encrypted value of the first signature.

10. The system of any of claims 7 to 9, wherein:
receiving a request further comprises receiving a request encoded in SOAP; and
sending a response further comprises sending a response encoded in SOAP.

11. The system of claim 10, wherein signing the value of the first signature further comprises:
creating a signature confirmation element, the signature confirmation element having a value;
setting the value of the signature confirmation element to the value of the first signature; and
signing the signature confirmation element, thereby creating a second signature;
wherein the response includes the signature confirmation element and the second signature.

12. The system of any of claims 7 to 11, wherein:
the request further comprises a plurality of elements bearing first signatures, the first signatures having values;
signing the value of the first signature further comprises signing the values of all of the first signatures, thereby creating a plurality of second signatures: and
sending a response further comprises sending a response that includes the plurality of second signatures.

13. A computer program comprising program code means adapted to perform all the steps of any of claims 1 to 6 when said program is run on a computer.

## Patentansprüche

1. Verfahren für sichere Datenübertragungen in Web-Diensten, wobei das Verfahren Folgendes umfasst:
Empfangen einer Anforderung in einem Web-Dienst von einem Anforderer, die ein Element enthält, das eine erste Signatur trägt, wobei die Signatur einen Wert hat;
Signieren des Werts der ersten Signatur, wodurch eine zweite Signatur erzeugt wird; und
Senden einer Antwort von dem Web-Dienst an den Anforderer, wobei die Antwort die zweite Signatur enthält.

2. Verfahren nach Anspruch 1, wobei:
das Empfangen einer Anforderung des Weiteren das Empfangen einer verschlüsselten Anforderung umfasst; und
das Verfahren des Weiteren das Verschlüsseln der Antwort in dem Web-Dienst umfasst.

3. Verfahren nach einem der vorhergehenden Ansprüche, wobei:
das Empfangen einer Anforderung des Weiteren das Empfangen einer Anforderung mit verschlüsselter erster Signatur umfasst;
das Verfahren des Weiteren das Verschlüsseln des Werts der ersten Signatur umfasst; und
die Antwort des Weiteren den verschlüsselten Wert der ersten Signatur umfasst.

4. Verfahren nach einem der vorhergehenden Ansprüche, wobei:
das Empfangen einer Anforderung des Weiteren das Empfangen einer in SOAP codierten Anforderung umfasst; und
das Senden einer Antwort des Weiteren das Senden einer in SOAP codierten Antwort umfasst.

5. Verfahren nach Anspruch 4, wobei das Signieren des Werts der ersten Signatur des Weiteren Folgendes umfasst:
Erzeugen eines Signatur-Bestätigungselements, wobei das Signatur-Bestätigungselement einen Wert hat;
Setzen des Werts des Signatur-Bestätigungselements auf den Wert der ersten Signatur; und
Signieren des Signatur-Bestätigungselements, wodurch eine zweite Signatur erzeugt wird;
wobei die Antwort das Signatur-Bestätigungselement und die zweite Signatur enthält.

6. Verfahren nach einem der vorhergehenden Ansprüche, wobei:
die Anforderung des Weiteren eine Vielzahl von Elementen umfasst, die erste Signaturen tragen, wobei die ersten Signaturen Werte haben;
das Signieren des Werts der ersten Signatur des Weiteren das Signieren der Werte von allen der ersten Signaturen umfasst, wodurch eine Vielzahl von zweiten Signaturen erzeugt wird; und
das Senden einer Antwort des Weiteren das Senden einer Antwort umfasst, die die Vielzahl der zweiten Signaturen enthält.

7. System für sichere Datenübertragungen in Web-Diensten, wobei das System einen Rechnerprozessor und einen Rechnerspeicher umfasst, wobei der Rechnerspeicher mit dem Rechnerprozessor funktionsmäßig verbunden ist, wobei sich in dem Rechnerspeicher Rechnerprogramm-Befehle befinden, die Folgendes können:
Empfangen einer Anforderung in einem Web-Dienst von einem Anforderer, die ein Element enthält, das eine erste Signatur trägt, wobei die Signatur einen Wert hat;
Signieren des Werts der ersten Signatur, wodurch eine zweite Signatur erzeugt wird; und
Senden einer Antwort von dem Web-Dienst an den Anforderer, wobei die Antwort die zweite Signatur enthält.

8. System nach Anspruch 7, wobei:
das Empfangen einer Anforderung des Weiteren das Empfangen einer verschlüsselten Anforderung umfasst; und
das System des Weiteren Rechnerprogramm-Befehle umfasst, die die Antwort in dem Web-Dienst verschlüsseln können.

9. System nach einem der Ansprüche 7 bis 8, wobei:
das Empfangen einer Anforderung des Weiteren das Empfangen einer Anforderung mit verschlüsselter erster Signatur umfasst;
das System des Weiteren Rechnerprogramm-Befehle umfasst, die den Wert der ersten Signatur verschlüsseln können; und
die Antwort des Weiteren den verschlüsselten Wert der ersten Signatur umfasst.

10. System nach einem der Ansprüche 7 bis 9, wobei:
das Empfangen einer Anforderung des Weiteren das Empfangen einer in SOAP codierten Anforderung umfasst; und
das Senden einer Antwort des Weiteren das Senden einer in SOAP codierten Antwort umfasst.

11. System nach Anspruch 10, wobei das Signieren des Werts der ersten Signatur des Weiteren Folgendes umfasst:
Erzeugen eines Signatur-Bestätigungselements, wobei das Signatur-Bestätigungselement einen Wert hat;
Setzen des Werts des Signatur-Bestätigungselements auf den Wert der ersten Signatur; und
Signieren des Signatur-Bestätigungselements, wodurch eine zweite Signatur erzeugt wird;
wobei die Antwort das Signatur-Bestätigungselement und die zweite Signatur enthält.

12. System nach einem der Ansprüche 7 bis 11, wobei:
die Anforderung des Weiteren eine Vielzahl von Elementen umfasst, die erste Signaturen tragen, wobei die ersten Signaturen Werte haben;
das Signieren des Werts der ersten Signatur des Weiteren das Signieren der Werte von allen der ersten Signaturen umfasst, wodurch eine Vielzahl von zweiten Signaturen erzeugt wird; und
das Senden einer Antwort des Weiteren das Senden einer Antwort umfasst, die die Vielzahl der zweiten Signaturen enthält.

13. Rechnerprogramm, das ein Programmcode-Mittel umfasst, das so ausgelegt ist, dass es alle Schritte nach einem der Ansprüche 1 bis 6 durchführt, wenn das Programm auf einem Rechner ausgeführt wird.

## Revendications

1. Procédé destiné à des communications de données sécurisées dans des services Web, le procédé comprenant les étapes consistant à :
recevoir dans un service Web en provenance d'un demandeur, une demande contenant un élément portant une première signature, la signature ayant une valeur,
signer la valeur de la première signature, en créant ainsi une deuxième signature, et
envoyer une réponse d'un service Web au demandeur, la réponse comprenant la deuxième signature.

2. Procédé selon la revendication 1, dans lequel :
la réception d'une demande comprend en outre la réception d'une demande cryptée, et
le procédé comprend en outre le cryptage de la réponse dans le service Web.

3. Procédé selon l'une quelconque des revendications précédentes, dans lequel :
la réception d'une demande comprend en outre la réception d'une demande avec la première signature cryptée,
le procédé comprend en outre le cryptage de la valeur de la première signature, et
la réponse comprend en outre la valeur cryptée de la première signature.

4. Procédé selon l'une quelconque des revendications précédentes, dans lequel :
la réception d'une demande comprend en outre la réception d'une demande codée dans le protocole SOAP, et
l'envoi d'une réponse comprend en outre l'envoi d'une réponse codée dans le protocole SOAP.

5. Procédé selon la revendication 4, dans lequel le fait de signer la valeur de la première signature comprend en outre :
la création d'un élément de confirmation de signature, l'élément de confirmation de signature ayant une valeur,
l'établissement de la valeur de l'élément de confirmation de signature à la valeur de la première signature, et
le fait de signer l'élément de confirmation de signature, en créant ainsi une deuxième signature,
dans lequel la réponse inclut l'élément de confirmation de signature et la deuxième signature.

6. Procédé selon l'une quelconque des revendications précédentes, dans lequel :
la demande comprend en outre une pluralité d'éléments portant des premières signatures, les premières signatures ayant des valeurs,
le fait de signer la valeur de la première signature comprend en outre le fait de signer les valeurs de toutes les premières signatures, en créant ainsi une pluralité de deuxièmes signatures, et
l'envoi d'une réponse comprend en outre l'envoi d'une réponse qui comprend la pluralité de deuxièmes signatures.

7. Système destiné à des communications de données sécurisées dans des services Web, le système comprenant un processeur d'ordinateur et une mémoire d'ordinateur, la mémoire d'ordinateur étant couplée de façon fonctionnelle au processeur d'ordinateur, la mémoire d'ordinateur ayant disposé dans celle-ci des instructions de programmes informatiques permettant de :
recevoir dans un service Web en provenance d'un demandeur, une demande contenant un élément portant une première signature, la signature ayant une valeur,
signer la valeur de la première signature, en créant ainsi une deuxième signature, et
envoyer une réponse du service Web au demandeur, la réponse comprenant la deuxième signature.

8. Système selon la revendication 7, dans lequel :
la réception d'une demande comprend en outre la réception d'une demande cryptée, et
le système comprend en outre des instructions de programmes informatiques permettant de crypter la réponse dans le service Web.

9. Système selon l'une quelconque des revendications 7 et 8, dans lequel :
la réception d'une demande comprend en outre la réception d'une demande avec la première signature cryptée,
le système comprend en outre des instructions de programmes informatiques permettant de crypter la valeur de la première signature, et
la réponse comprend en outre la valeur cryptée de la première signature.

10. Système selon l'une quelconque des revendications 7 à 9, dans lequel :
la réception d'une demande comprend en outre la réception d'une demande codée dans le protocole SOAP, et
l'envoi d'une réponse comprend en outre l'envoi d'une réponse codée dans le protocole SOAP.

11. Système selon la revendication 10, dans lequel le fait de signer la valeur de la première signature comprend en outre :
la création d'un élément de confirmation de signature, l'élément de confirmation de signature ayant une valeur,
l'établissement de la valeur de l'élément de confirmation de signature à la valeur de la première signature, et
le fait de signer l'élément de confirmation de signature, en créant ainsi une deuxième signature,
dans lequel la réponse inclut l'élément de confirmation de signature et la deuxième signature.

12. Système selon l'une quelconque des revendications 7 à 11, dans lequel :
la demande comprend en outre une pluralité d'éléments portant des premières signatures, les premières signatures ayant des valeurs,
le fait de signer la valeur de la première signature comprend en outre le fait de signer les valeurs de toutes les premières signatures, en créant ainsi une pluralité de deuxièmes signatures, et
l'envoi d'une réponse comprend en outre l'envoi d'une réponse qui comprend la pluralité de deuxièmes signatures.

13. Programme informatique comprenant un moyen de code de programme conçu pour exécuter toutes les étapes selon l'une quelconque des revendications 1 à 6 lorsque ledit programme s'exécute sur un ordinateur.
